# EUROPEAN PATENT APPLICATION

(11) **EP 2 486 831 A1**
(43) Date of publication of application: **15.08.2012**
(21) Application number: 12380007.0
(22) Date of filing: 10.02.2012
(51) Int. Cl.: A47J 37/04

(54) **Industrial fryer**

(30) Priority: 10.02.2011 ES 201100142
(71) Applicant: Fit & Fast S.L., 28037 Madrid (ES)
(72) Inventor: Pecci Baquero, Esperanza, 28037 Madrid (ES)
(74) Representative: Garcia-Cabrerizo y del Santo, Pedro Maria

(57) **Abstract**

The present invention relates to an industrial fryer of the type used for cooking food products such as potatoes, barks, etc., without oil or using a minimum amount of oil, formed by a shell or outer structure (11) made of stainless steel provided with a thermal and electrical insulation (6), one or more glass doors (9), one or more food-carrier baskets (8), a low speed motor (4) for each basket, through which the baskets (8) spin about themselves, an air intake plenum (7) that draws air from outside, a heating chamber (1) in which is an electrical resistance (3) that satisfies the caloric demand of the process, a fan (5) and a bottom air supply plenum (10) that distributes the hot air between the baskets (8).

## Description

### Object of the Invention

The present invention relates to an industrial fryer, intended for the food sector and particularly intended for frying potatoes, barks and other foods with low oil content.

The object of the invention is to provide a fryer for cooking industrial quantities of potatoes without oil or with a minimum amount of oil, being applicable not only in the domestic field, but in catering and even in the production of packaged product, remaining with an appearance and texture very similar to French fries immersed in oil.

### Background of the Invention

Fried snacks and, in particular, French fries are products widely demanded in restaurant business, especially in fast food restaurants. Fryers used hitherto for the production of French fries in large quantities, on an industrial scale, generally consist of an oil reservoir which is heated to carry out the frying. However, the current trend to eliminate or reduce the fat and oils in food, in order to obtain healthier products, makes necessary to design fryers that allow food to be cooked without using oil or using a minimal amount of oil. This not only is a great advantage in terms of health and diet, but a great savings for the industry to avoid the expense involved in the use of oil for frying.

There is on the market a fryer that uses very small amounts of oil, but it is a fryer designed to family life, which is a kind of pan with a tool on the center making the potatoes to spin, which are heated by circulating the air inside the apparatus. The big disadvantage is that only allows cooking small amounts (approx. 1 kg) and requires long times, which is absolutely insufficient when working at a restaurant.

Furthermore, there are on the market the well known "convection ovens", which operate by moving the air inside so that the heat remains uniformly distributed so that the product is heated or roasted, but without getting the final texture of the fried product.

Therefore, the present invention proposes an industrial fryer that allows cooking food, especially potatoes, in large quantities, efficiently and with minimal oil consumption, thereby obtaining French fries with lower calories, lower in saturated fat and maintaining organoleptic properties similar to those of the oily French fries.

### Disclosure of Invention

The fryer proposed in the present invention comprises an outer structure or shell made of stainless steel for food use and is provided at its front with one or several tempered glass access doors that withstand high temperatures. Through such doors you can see and access to the content inside the fryer. Inside the structure making up the fryer, there are one or more baskets, preferably cylindrical, within which potatoes or particular foods intended to be fried will be hosted. The baskets can rotate about themselves through a low speed motor, so that, by being in continuous movement, these prevent the product to be bonded or agglomerated. The cooked product is achieved by sufficiently hot air circulation between the baskets. Air is drawn into a top plenum by a fan that forces air to pass through a heating chamber provided with a resistance that satisfies the heat power required by the process. The hot air exiting the heating chamber is driven by a plenum into the fryer for circulating between the baskets.

To assure a continuous renewal of indoor air, the fryer can have an adjustable air inlet at the top and/or back of the steel structure, just before the fan intake.

Indoor air can be recirculated without the need of constantly taking and heating outside air.

Fryer also includes a thermal and electrical insulation covering its whole structure for preserving the heat inside and for greater safety of machine operators.

By using this cooking system with hot air circulation through the food product and the continued movement of the product to be cooked, a product with organoleptic properties similar to those of a product fried with is obtained.

### Description of the Drawings

In order to facilitate the understanding of the object constituting the invention, a figure is accompanied wherein with an illustrative and not limitative manner the following has been represented:

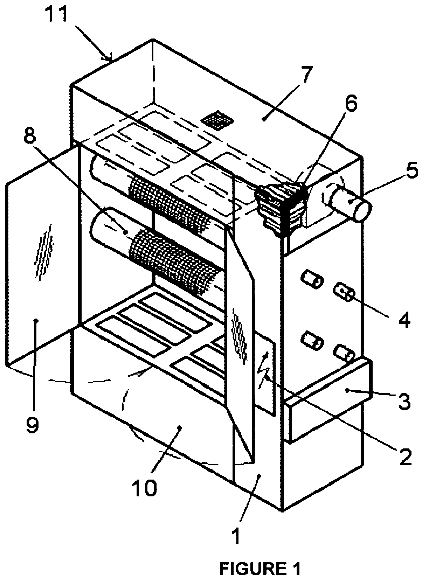

Figure 1: a view of the industrial fryer of the present invention

In such figure, the various references listed therein have the following meanings:
1.-Heating chamber
2.-Switch and Control board
3.-Electrical Resistance
4.-Low speed engine
5.-Fan
6.-Isolation
7.-Air intake plenum
8.-Food-carrier basket
9.-Glass door
10.- Air supply plenum
11.-Stainless steel structure

### Detailed description of a preferred embodiment

To help better understand everything described above, a preferred embodiment of the invention is described, all of it in agreement to the formal and functional considerations mentioned bellow.

The fryer comprises a shell or outer structure (11) made of stainless steel for food use, inside of which four food-carrier baskets (8) with a cylindrical shape (in the figure are visible only two of them) are arranged in zigzag. These baskets (8) revolve about themselves during the cooking process by low speed motors (4), one for each basket, in such a way as to achieve a homogeneous heating of the food and prevent agglomeration or sticking of the same. The fryer, in turn, comprises an air intake plenum (7) located at its top which draws air from outside. This drawn air is forced by a fan (5) to pass through the heating chamber (1) where is the electrical resistance (3) satisfying the caloric demand of the process. The hot air is delivered by the bottom air supply plenum (10) by means of lip spoilers, and distributed among the baskets (8) because of their zigzag arrangement.

The baskets (8) would rotate on their axes preventing food from sticking together and making the air entirely flow through the same, and passing it from the bottom up continuously. Besides being arranged such baskets (8) in zigzag, the air is forced to circulate between them, and hence the heat uniformly arrives to all gaps between the foods.

The fryer has on its front glass doors (9) that allow you to view and access to the inside thereof, as well as a switch and control board (2) by which the conditions of the cooking process are programmed and monitored.

In order to have the lowest possible heat loss, the structure of the fryer is built with sandwich-type panels with thermal and electrical insulation (6) therein.

The industrial fryer thus designed, with primary application in catering business, allows cooking potatoes on an industrial level and quickly. By using a minimum quantity of oil over the potatoes a healthier and less caloric product is achieved, in addition to the cost savings that entails cooking without oil.

## Claims

1. Industrial fryer of the type used for cooking food products such as potatoes, barks, etc., **characterized in that** it comprises the following elements:
- A shell or outer structure (11) made of stainless steel provided with a thermal and electrical insulation (6)
- access doors (9) made of glass located at the front of the structure (11)
- food-carrier baskets (8) located inside the structure (11)
- low speed engines (4), one for each basket, through which the baskets (8) spin on themselves during the cooking process
- an air intake plenum (7) which draws air from outside
- a heating chamber (1) in which is an electrical resistance (3) that satisfies the caloric demand of the process
- a fan (5) that forces the drawn air into the air intake plenum (7) to pass through the heating chamber (1)
- a bottom air supply plenum (10) that distributes the hot air between the baskets (8).

2. Industrial fryer according to claim 1, **characterized in that** it comprises, at the front of the structure (11), a switch and control board (2) which monitors and program the cooking process conditions.

3. Industrial fryer according to claim 1, **characterized in that** it comprises an adjustable air inlet at the top of the steel structure (11) to ensure a continuous renewal of the inner air.

4. Industrial fryer according to claim 1, , **characterized in that** the food-carrier baskets (8) have a cylindrical shape.

5. Industrial fryer according to claim 4, **characterized in that** it comprises four food-carrier baskets (8) arranged in zigzag.

6. Industrial fryer of the type used for cooking food products such as potatoes, barks, etc., **characterized in that** it comprises the following elements:
- A shell or outer structure (11) made of stainless steel provided with a thermal and electrical insulation (6)
- an access door (9) made of glass located at the front of the structure (11)
- a cylindrical food-carrier basket (8) located inside the structure (11)
- a low speed engine (4), through which the basket (8) spins on itself during the cooking process
- an air intake plenum (7) which draws air from outside
- a heating chamber (1) in which is an electrical resistance (3) that satisfies the caloric demand of the process
- a fan (5) that forces the drawn air into the air intake plenum (7) to pass through the heating chamber (1)
- a bottom air supply plenum (10) that distributes the hot air inside the shell (11)
- a switch and control board (2) which monitors and programs the cooking process conditions
- an adjustable air inlet at the top and/or back of the steel structure (11) to ensure a continuous renewal of indoor air.
